Europäisches Patentamt

European Patent Office

Office européen des brevets

(19)

(11) Numéro de publication: **0 479 637 B1**

## (12) FASCICULE DE BREVET EUROPEEN

(45) Date de publication de fascicule du brevet: **05.04.95**

(21) Numéro de dépôt: **91402489.8**

(22) Date de dépôt: **18.09.91**

(51) Int. Cl.6: **C08L 95/00**, C09D 195/00,
//(C08L95/00,23:00)

(54) **Compositions pare-vapeur à base de bitume modifié.**

(30) Priorité: **03.10.90 FR 9012177**

(43) Date de publication de la demande:
**08.04.92 Bulletin 92/15**

(45) Mention de la délivrance du brevet:
**05.04.95 Bulletin 95/14**

(84) Etats contractants désignés:
**BE CH DE ES GB IT LI LU**

(56) Documents cités:
**EP-A- 0 096 614**
**EP-A- 0 380 384**

(73) Titulaire: **SOCIETE DE PAVAGE ET DES AS-PHALTES DE PARIS SOCIETE ANONYME DITE:**
**Route Principale du Port**
**F-92230 Gennevilliers**
**Hauts-de-Seine (FR)**

(72) Inventeur: **Ranc, Denis**
**5, rue de Bretagne**
**F-95330 Domont (FR)**
Inventeur: **Rubio, Raymond**
**14, rue Mauregard**
**F-77230 Othis (FR)**
Inventeur: **De Fay, Thierry**
**12, rue Baragué**
**F-78390 Bois d'Arcy (FR)**

(74) Mandataire: **Simonnot, Bernard et al**
**Cabinet Simonnot**
**35 rue de Clichy**
**F-75442 Paris Cédex 09 (FR)**

**Description**

La présente invention concerne des compositions pare-vapeur à base de bitume modifié, ainsi que leur application à la réalisation de revêtements d'étanchéité.

On sait qu'un revêtement d'étanchéité sur couche isolante, notamment dans le domine du bâtiment, nécessite la pose d'un pare-vapeur. Ce pare-vapeur a pour rôle d'empêcher la migration de l'humidité intérieure du bâtiment vers l'isolant où elle pourrait se condenser. Le pare-vapeur est généralement sous la forme d'une feuille de feutre imprégné de bitume, collée au moyen d'une couche d'un enduit d'application à chaud (EAC) sur une couche de base d'un enduit d'imprégnation à froid (EIF), puis enfin recouverte d'une nouvelle couche de EAC. Une telle structure de revêtement, et en particulier de son pare-vapeur, si elle donne des résultats satisfaisants quant à l'effet recherché, implique l'utilisation et la manipulation de la feuille de feutre imprégné, ainsi que l'éxécution d'opérations répétées d'application de couches successives de matériaux ou de produits, dont deux couches EAC à une température de l'ordre de 150°C. Ainsi, la réalisation d'un revêtement d'étanchéité se traduit par une durée de travail de pose importante, ce qui entraîne finalement des frais d'exploitation relativement élevés.

La présente invention vise donc à remédier aux inconvénients ci-dessus, en fournissant une composition pare-vapeur économique en soi, supprimant en outre l'utilisation de la feuille de feutre et impliquant un minimum d'opérations de pose.

La Demanderesse a en effet découvert que l'on pouvait adapter avec succès un bitume modifié pour compositions d'asphalte coulé, tel que décrit dans ses demandes de brevets français n° 89 00 449 déposée le 16 Janvier 1989 et n° 90 00 298 déposée le 11 Janvier 1990, à la réalisation d'une composition pare-vapeur présentant les avantages évoqués ci-dessus. Selon la première demande de brevet français précitée, un bitume modifié comprend essentiellement de 5 à 20% en poids environ d'un copolymère d'oléfine et d'ester aliphatique insaturé ainsi que d'acide aliphatique insaturé, tandis que selon la seconde demande précitée, un bitume modifié renferme en outre de 5 à 40% en poids environ d'une huile lourde de lubrification de moteurs thermiques à combustion interne. Dans les deux cas, le bitume de base est de grade 40/50 ou 80/100.

Conformément à la présente invention, une composition pare-vapeur comprend un liant constitué par 35 à 45% en poids environ de bitume modifié, contenant au moins ledit copolymère à une teneur de 10 à 12% en poids environ, et de 50 à 65% en poids environ d'une poudre d'asphalte naturel à haute teneur en fines passant à 0,08 mm et dont la granulométrie n'excède pas 0,315 mm, moyennant quoi la composition présente une température d'essai bille-anneau de l'ordre de 80°C et une déformabilité à -20°C de l'ordre de 15%.

La formulation générale ci-dessus convient avantageusement dans la réalisation d'une composition pare-vapeur liquide, dans laquelle le liant comprend de 80 à 90% en poids environ de bitume de grade 180/220 et de 10 à 12% en poids environ de copolymère.

Dans une composition pare-vapeur dans laquelle le bitume de base est de grade 80/100 et, de préférence, 40/50, le liant comprend 10% en poids du copolymère et, en outre, 12% en poids environ d'huile lourde.

La poudre d'asphalte naturel telle que définie ci-dessus renferme environ 80% en poids d'éléments passant à 0,08 mm, alors qu'une poudre provenant de la fabrication destinée à la préparation d'asphaltes coulés en usine renferme environ 55% des fines précitées mais une granulométrie comprise entre 0,08 et 2,5 mm. Or on a constaté au cours des travaux de recherche que cette dernière poudre ne permet pas d'obtenir un produit homogène, les parties les plus grosses du squelette minéral se déposant très rapidement et cette décantation étant d'autant plus marquée qu'on approche de la température de mise en oeuvre.

On donne ci-après, à titre d'exemple illustratif, les résultats d'essais comparatifs mettant en évidence les teneurs optimales et les propriétés essentielles de compositions selon l'invention. Ces résultats sont rassemblés dans le tableau ci-après, où l'on a porté les teneurs en pourcentages en poids rapportés à la composition finale, et où l'on a utilisé les abréviations suivantes :

| | |
|---|---|
| 90.10 | : bitume 180/220 modifié renfermant 10% de copolymère ; |
| 78.10.12 | : bitume 40/50 modifié renfermant 10% de copolymère et 12% d'huile lourde ; |
| CP | : copolymère |
| HL | : huile lourde |
| P 25 | : pénétration à 25°C |
| P 40 | : pénétration à 40°C |
| IP | : indice de pénétration |
| TBA | : température bille-anneau |

ΔL/L %      : taux de déformation dans l'essai de traction à vitesse de déformation constante de 1mm/mn, à -20°C.

En outre, les essais ont été effectués en comparaison avec un témoin constitué par un EAC de classe 100/40.

| BITUME | EAC | 90.10 | | | 78.10.12 | | | |
|---|---|---|---|---|---|---|---|---|
| 180/220 | | 45 | 40,5 | 36,0 | - | - | - | - |
| 40/50 | | - | - | - | 39,0 | 35,1 | 31,2* | 27,3* |
| CP | | 5 | 4,5 | 4,0 | 5,0 | 4,5 | 4,0 | 3,5 |
| HL | | - | - | - | 6,0 | 5,4 | 4,8 | 4,2 |
| Poudre | | 50 | 55 | 60 | 50 | 55 | 60 | 65 |
| P. 25° | 17,0 | 30,75 | 17,8 | 15,5 | 21,0 | 13,0 | 8,0 | 3,0 |
| P. 40° | 67,2 | 59 | 37,6 | 38,5 | 44,0 | 36,2 | 28,5 | 12,2 |
| IP | 0 | +5,4 | +4,4 | +3,0 | +4,7 | +2,1 | +1,2 | 0 |
| TBA | 110 | 81 | 83 | 88,25 | 78,0 | 81,6 | 90 | 94 |
| ΔL/L % | 8,9 | >15 | >15 | >15 | >15 | >15 | >15 | 6,0 |

*exemple comparatif

Il y a lieu de noter que les compositions selon le Tableau ci-dessus prêtent à une application aisée à la température de mise en oeuvre les amenant à l'état liquide et que leurs caractéristiques sont particulièrement avantageuses. Ainsi, une composition répondant à la formulation 45% de bitume 90.10 et 55% de poudre d'asphalte permet d'obtenir une TBA de 83°C et une déformabilité supérieure à 15%. Par ailleurs, les fabrications réalisées à partir d'un bitume modifié 78.10.12 donnent des produits ayant des caractéristiques nettement supérieures à un EAC sur le plan de la déformabilité à froid, pour des teneurs en poudre d'asphalte de l'ordre de 50 à 60% en poids. Ainsi, une composition particulière répondant à la formulation 40% de 78.10.12 et 60% de poudre d'asphalte, permet d'obtenir une TBA d'environ 90°C et une déformabilité d'environ 15%.

Une composition selon l'invention constitue un pare-vapeur en soi et agit comme tel dans des revêtements étanches à la vapeur. De ce fait, conformément à l'invention, un revêtement étanche à la vapeur ne comprend que la couche de EIF de base usuelle et la composition elle-même en tant que pare-vapeur, appliquée à une température de 140°C environ, et sur laquelle il est possible de rapporter des panneaux isolants. On peut faire adhérer ces panneaux sur la composition immédiatement après sa mise en oeuvre à chaud ou bien après refroidissement, auquel cas il suffit de pratiquer un réchauffement par les moyens usuels appropriés. La pose de panneaux isolants peut être également réalisée en indépendance, après refroidissement.

La composition selon l'invention trouve donc une application dans les revêtements d'étanchéité en général ainsi que dans le calfeutrement des bandes porte-solins, des joints de dilatation de parking, des fissures à réparer dans les revêtements de parking, et des joints de retrait dans les revêtements en asphalte coulé. Une composition selon l'invention permet en effet de réaliser des joints de fractionnement dans des revêtements en asphalte coulé, du fait qu'elle présente en elle-même les qualités requises, à savoir :

- étanchéité propre
- bonnes caractéristiques élastiques, y-compris aux basses températures

- bonne adhérence aux parois en asphalte.

Ainsi, l'application d'une telle composition permet de réaliser des revêtements de parkings accessibles aux véhicules lourds, constitués d'un asphalte coulé de très grande dureté et de joints de retrait garnis avec ladite composition.

Il est bien entendu que la présente invention n'a été décrite qu'à titre explicatif mais nullement limitatif et qu'on pourra y apporter toute modification utile, notamment dans le domaine des équivalences techniques, sans sortir de son cadre.

**Revendications**

1. Composition pare-vapeur, comportant un bitume modifié renfermant au moins un copolymère d'oléfine et d'ester aliphatique insaturé ainsi que d'acide aliphatique insaturé, caractérisée jar le fait qu'elle comprend en poids de 35 à 45% environ de bitume modifié, contenant lui-même de 10 à 12% en poids environ dudit copolymère, et de 50 à 65% environ d'une poudre d'asphalte à haute teneur en fines passant à 0,08 mm et dont la granulométrie n'excède pas 0,315 mm, moyennant quoi la composition présente une température d'essai bille-anneau de l'ordre de 80°C et une déformabilité à -20°C de l'ordre de 15%.

2. Composition pare-vapeur selon la revendication 1, caractérisée par le fait que le bitume de base est de grade 180/220, avec 10 à 12% en poids environ de copolymère.

3. Composition pare-vapeur selon la revendication 2, caractérisée par le fait qu'elle répond à la formulation : 45% en poids environ de bitume modifié de grade 180/220, renfermant 10% en poids de copolymère, et 55% en poids environ de poudre d'asphalte.

4. Composition pare-vapeur selon la revendication 1, dans laquelle le bitume modifié contient en outre une huile lourde du type huile de lubrification de moteurs thermiques à combustion interne, caractérisée par le fait que le bitume de base est de grade 40/50 ou 80/100, avec 10% en poids environ de copolymère et 12% en poids environ d'huile lourde.

5. Composition pare-vapeur selon la revendication 4, caractérisée par le fait qu'elle répond à la formulation : 40% en poids environ de bitume modifié 40/50 renfermant 10% en poids de copolymère et 12% en poids d'huile lourde, ainsi que 60% en poids environ de poudre d'asphalte.

6. Application d'une composition pare-vapeur selon l'une quelconque des revendications 1 à 5 à la réalisation de revêtements étanches à la vapeur, constitués par une couche d'enduit d'imprégnation à froid et une couche de ladite composition, sur laquelle peuvent être rapportés des panneaux isolants, notamment par adhérence à chaud, ainsi qu'à la réalisation de joints de retrait dans des revêtements en asphalte coulé de très grande dureté.

**Claims**

1. A vapour-barrier composition, comprising a modified bitumen containing at least one copolymer of olefin and of unsaturated aliphatic ester and of unsaturated aliphatic acid, characterised by the fact that it comprises approximately 35 to 45% by weight modified bitumen, itself containing 10 to 12% by weight of said copolymer, and approximately 50 to 65% by weight of an asphalt powder having a high content of fines < 0.08 mm and the grain size of which does not exceed 0.315 mm, in which the composition has a ball-ring test temperature of the order of 80°C and a deformability at -20°C of the order of 15%.

2. A vapour-barrier composition according to Claim 1, characterised by the fact that the base bitumen is of 180/220 grade, with approximately 10 to 12% by weight copolymer.

3. A vapour-barrier composition according to Claim 2, characterised by the fact that it corresponds to the formulation: approximately 45% by weight modified bitumen of 180/220 grade, containing 10% by weight copolymer, and approximately 55% by weight asphalt powder.

**4.** A vapour-barrier composition according to Claim 1, in which the modified bitumen furthermore contains a heavy oil of the type oil for lubricating internal combustion heat engines, characterised by the fact that the base bitumen is of 40/50 or 80/100 grade, with approximately 10% by weight copolymer and approximately 12% by weight heavy oil.

**5.** A vapour-barrier composition according to Claim 4, characterised by the fact that it corresponds to the formulation: approximately 40% by weight modified bitumen 40/50, containing 10% by weight copolymer and 12% by weight heavy oil, and approximately 60% by weight asphalt powder.

**6.** The application of a vapour-barrier composition according to any one of Claims 1 to 5 to the production of vapour-tight coatings, formed by a layer of cold-impregnation plaster and a layer of said composition, to which insulating slabs may be attached, in particular by hot-adhesion, and also to the production of contraction joints in coatings of poured asphalt of very great hardness.

**Patentansprüche**

**1.** Dampfsperrmasse mit einem Gehalt an modifiziertem Bitumen, das wenigstens ein Copolymer von Olefin und ungesättigtem aliphatischem Ester sowie ungesättigter aliphatischer Säure enthält, **dadurch gekennzeichnet,** daß sie etwa 35 bis 45 Gewichtsprozent modifiziertes Bitumen, das selbst etwa 10 bis 12 Gewichtsprozent des Copolymers enthält, und etwa 50 bis 65 % eines Asphaltpulvers mit hohem Gehalt an Feinkorn, das durch 0,08 mm geht und dessen Korngrößenverteilung 0,315 mm nicht überschreitet, enthält, wodurch die Masse eine Ring-Kugel-Prüftemperatur in der Größenordnung von 80 °C und eine Verformbarkeit bei -20 °C in der Größenordung von 15 % aufweist.

**2.** Dampfsperrmasse nach Anspruch 1, **dadurch gekennzeichnet,** daß das Basis-Bitumen vom Grad 180/220 mit etwa 10 bis 12 Gewichtsprozent des Copolymers ist.

**3.** Dampfsperrmasse nach Anspruch 2, **dadurch gekennzeichnet,** daß sie folgender Formulierung entspricht: etwa 45 Gewichtsprozent modifiziertes Bitumen vom Grad 180/220, das 10 Gewichtsprozent des Copolymers enthält, und etwa 55 Gewichtsprozent des Asphaltpulvers.

**4.** Dampfsperrmasse nach Anspruch 1, worin das modifizierte Bitumen außerdem ein Schweröl vom Typ Schmieröl für Verbrennungskraftmaschinen enthält, **dadurch gekennzeichnet,** daß das Basis-Bitumen vom Grad 40/50 oder 80/100 ist, mit etwa 10 Gewichtsprozent des Copolymers und etwa 12 Gewichtsprozent des Schweröls.

**5.** Dampfsperrschicht nach Anspruch 4, **dadurch gekennzeichnet,** daß sie der folgenden Formulierung entspricht: etwa 40 Gewichtsprozent modifiziertes Bitumen 40/50, das 10 Gewichtsprozent des Copolymers und 12 Gewichtsprozent des Schweröls enthält, sowie etwa 60 Gewichtsprozent des Asphaltpulvers.

**6.** Verwendung einer Dampfsperrmasse nach einem der Ansprüche 1 bis 5 zur Herstellung von dampfdichten Überzügen, die aus einer Kaltauftragsschicht und einer Schicht der Masse bestehen, auf welcher Isolierplatten, besonders durch Heißkleben, angebracht werden können, sowie zur Herstellung von Schrumpffugen in Gußasphaltschichten oder -überzügen mit sehr großer Härte.